# EUROPÄISCHE PATENTSCHRIFT

(11) **EP 0 433 527 B1**
(45) Veröffentlichungstag und Bekanntmachung des Hinweises auf die Patenterteilung: **22.09.1993**
(21) Anmeldenummer: 90100465.5
(22) Anmeldetag: 10.01.1990
(51) Int. Cl.: H02J 13/00, H05B 37/02

(54) **Steuersystem für mehrere Verbraucher**
Control arrangement for several consumers
Dispositif de commande pour plusieurs utilisateurs

(30) Priorität: 21.12.1989 EP 89123678
(43) Veröffentlichungstag der Anmeldung: 26.06.1991
(73) Patentinhaber: Zumtobel Aktiengesellschaft, A-6850 Dornbirn (AT)
(72) Erfinder: Werner, Walter, Dr., A-6850 Dornbirn (AT)
(74) Vertreter: Schmidt-Evers, Jürgen, Dipl.-Ing.

(56) Entgegenhaltungen:
- EP-A- 0 267 528
- WO-A-86/06890
- US-A- 4 347 575
- US-A- 4 808 841
- PATENT ABSTRACTS OF JAPAN vol. 9, no. 266 (E-352)(1989) 23 Oktober 1985, & JP-A-60 112336 (NIPPON DENKI K.K.) 18 Juni 1985,
- WIRELESS WORLD. vol. 90, no. 1583, September 1983, OLDHILL DUNSTABLE GB Seiten 33 - 36; I. KEMP: "Stage Lighting System"

## Beschreibung

Die Erfindung betrifft ein Steuersystem für mehrere verteilt anzuordnende Verbraucher, insbesondere Beleuchtungskörper nach dem Oberbegriff der Ansprüche 1 bzw. 22. Sie betrifft ferner ein Verfahren zum In-Funktion-Setzen eines Steuersystems gemäß Anspruch 17.

Für Häuser oder größere Gebäude ist es erforderlich, daß in mehreren Räumen angeordnete Verbraucher, insbesondere Lichtquellen, nicht nur über die in den jeweiligen Räumen angeordneten Schalter und/oder Dimmer ein- und ausgeschaltet bzw. in ihrer Helligkeit eingestellt werden können, sondern daß über zentrale Steuergeräte diese Funktionen ferngesteuert werden können. Eine Fernsteuerung wird dabei von sogenannten Leitstellen oder Befehlsgebern durchgeführt, welche die dezentral in den mehreren Räumen angeordneten und an ein gemeinsames Versorgungsnetz, üblicherweise das 220 V Haushaltsnetz, angeschlossenen Verbraucher über Befehle ansprechen und steuern können. Auf diese Weise wird eine zentrale Überwachung und Steuerung, gegebenenfalls von mehreren Leitstellen aus, für alle dezentral angeordneten Verbraucher möglich. Mit "Verbraucher" werden beliebige elektrisch gespeiste Elemente bezeichnet, beispielsweise Glühlampen, Gasentladungslampen, Elektromotoren oder Heizeinrichtungen. Ein Elektromotor kann beispielsweise an eine Jalousie oder an einen Türöffnungs- und -schließmechanismus gekoppelt sein.

Ein Steuersystem der eingangs genannten Art ist beispielsweise bekannt unter der Bezeichnung Timac X-10. In einem solchen Steuersystem werden Leitstellen zum Senden und Gerätestellen zum Empfangen mit dem Haushaltsnetz verbunden. Den einzelnen Gerätestellen werden dabei Betriebsadressen derart zugeordnet, daß an jeder Gerätestelle je zwei rastende Stellräder vorgesehen sind, wovon das erste Stellrad 16 Zahlen aufweist und das zweite Stellrad mit Buchstaben von A bis P bezeichnet ist.

Mit dem zweiten Stellrad wird für die Adresse ein Hauscode (A-P) eingestellt, mit dem ersten Stellrad wird die Gerätestellennummer (1...16) für die Adresse eingestellt. Die beiden Stellräder werden von dem Benutzer für jede Gerätestelle auf eine bestimmte Kombination eingestellt, beispielsweise B10 oder P1. Diese Kombination bildet die Ansprechadresse für die jeweilige Gerätestelle. Auf diese Weise kann nach Installation bzw. Anbringung einer Gerätestelle eine eindeutig bestimmte Adresse für jeden Verbraucher vor Ort eingestellt werden, die sich aus den genannten zwei Komponenten zusammensetzt. Eine Leitstelle weist zur Steuerung einer bestimmten Anzahl von Verbrauchern die gleiche Anzahl von Steuertasten auf, jeder Steuertaste wird eine einer Gerätestelle entsprechende Betriebsadresse über jeweils zwei Stellräder oder Einstelltasten in der Leitstelle zugeordnet. Über Steuertastendruck läßt sich auf diese Weise von der Leitstelle die Gerätestelle (mit angeschlossenem Verbraucher) fernsteuern, die jeweils in ihrer eingestellten Betriebsadresse mit der einer jeweiligen Steuertaste zugeordneten Adresse korrespondiert.

Aus demselben System sind auch bereits Dialog-Fernschalter bekannt, die den oben beschriebenen Gerätestellenempfänger und gleichzeitig einen Zustandssender umfassen. Sie bilden die Kombination aus Fernsteuermöglichkeit und lokaler Steuerung der Verbraucher mittels üblichen Schalter oder Sensortaster. Wird bei einen solchen Dialog-Fernschalter vor Ort eine Lampe ein- oder ausgeschaltet, so sendet dieser Dialog-Fernschalter eine Statusinformation an die zentrale Leitstelle, die nunmehr über den neuen Betriebszustand des Verbrauchers informiert ist.

WO-A-86/06890 offenbart ein Steuersystem für mehrere verteilt angeordnete Verbraucher, die über elektrische Leitungen miteinander verbunden sind. Zur Steuerung der Verbraucher ist ein tragbares Steuergerät vorhanden, das mit speziellen Steuermodulen des Systems kommuniziert, die wiederum diese Befehle falls notwendig an andere Module weiterleiten. Die Befehle des Steuergeräts enthalten Adressen, welche die Module mit den eigenen abgespeicherten Adressen vergleichen. Diese Adressen sind mit Hilfe des Steuergeräts innerhalb der Module in die Speicher vorprogrammiert.

EP-A-0 267 528 offenbart ein digitales Nachrichtenübertragungssystem mit Adressen aufweisenden Zwischenregeneratoren. Das darin beschriebene digitale Nachrichtenübertragungssystem enthält eine Vielzahl von Zwischenregeneratoren zwischen den beiden Endstellen des Systems. Diese Zwischenregeneratoren dienen zur Fehlerortung und sind von einer Endstelle aus gezielt ansteuerbar. Dabei enthalten die Zwischenregeneratoren Adressenspeicher, in denen jeweils eine Adresse unveränderbar abgespeichert ist. Diese Adresse entspricht einer bei der Geräteherstellung üblichen Fabrikationsnummer.

Der Erfindung liegt die Aufgabe zugrunde, ein verbessertes Steuersystem für verteilt anzuordnende Verbraucher zu schaffen, das auf besonders einfache Art in Funktion gesetzt werden kann.

Die Aufgabe ist bei einem Steuersystem der eingangs genannten Art durch die im Kennzeichen der Ansprüche 1 bzw. 22 angegebenen Merkmale gelöst.

Ein Verfahren zum In-Funktion-Setzen eines Steuersystems gemäß der Erfindung mit eigenem erfinderischen Gehalt weisen die Verfahrensschritte a) bis e) gemäß Anspruch 17 auf.

Ein wesentlicher Zweck der Erfindung liegt in der Vereinfachung und gleichzeitigen Verbesserung der Anwahlmöglichkeit der einzelnen dezentral angeordneten Empfänger bzw. diesen zugeordneten Verbrauchern von einem zentralen Befehlsgeber. Der Ersatz der nach dem Stand der Technik bekannten mechanischen Speicher in der Form von Stellrädern durch ein elektrisch schreibbares Speichermedium erlaubt die sukzessive Vergabe von Betriebsadressen an jeden Empfänger direkt durch den zentralen Befehlsgeber. Der diesbezügliche erfindungsgemäße Effekt liegt in der Einstellung und dem In-Funktion-Setzen des Systems nach Installation des Systems, ohne daß vor Installation eine Adresseneinstellung erforderlich ist. Dabei ist besonders vorteilhaft, daß zur Montage der einzelnen - nun nicht mehr durch Stellräder einzustellenden - Verbraucher an ihren dezentralen Orten auch Hilfspersonal zum Einsatz kommen kann.

Das erfindungsgemäße Nebeneinander von Betriebsadresse und Ursprungsadresse wird erst nach vollständiger Installation entweder von dem Anwender selbst oder von einer qualifizierten Person gemaß dem Verfahren von Anspruch 17 in kurzer Zeit herbeigeführt.

Ein weiterer Zweck, die Betriebsadressen der Verbraucher auch nach deren Montage beliebig ändern zu können, ohne daß hierfür Einstellarbeiten vorort, d.h. Manipulationen direkt am Verbraucher, durchgeführt werden müssen, wird ebenfalls mit der Erfindung verfolgt. Die Vergabe der Betriebsadressen vom Befehlsgeber aus, erlaubt erfindungsgemäß die freie Wahl und ebenso freie spätere Änderung der einmal gewählten Betriebsadressen für die einzelnen Empfänger bzw. diesen zugeordneten Verbrauchern. Eine Einstellung an jedem Verbraucher selbst entfällt. Es ist damit erfindungsgemäß entbehrlich, daß jemand auf eine Leiter steigen muß, um an einem Verbraucher, insbesondere an einem deckenmontierten Beleuchtungskörper, mechanische Einstellarbeiten vorzunehmen. Sämtliche Einstellungs- und Bedienungsfunktionen sind erfindungsgemäß von dem Befehlsgeber aus durchführbar.

Ein weiterer wesentlicher Zweck der Erfindung liegt darin, ein Steuersystem zu schaffen, das sich an beliebige Kombinationen von Verbrauchern einfach anpassen läßt bzw. selbst anpaßt (Autoadaption). Hierbei werden einzelne Verbraucher gemäß vorteilhafter Weiterbildung durch ihre Kennzeichnungsadressen spezifiziert, d.h. in ihrer Art identifiziert. Ein erfindungsgemäßer Befehlsgeber kann ohne weitere Einstellung selbsttätig angeschlossene Geräte erkennen und entsprechend fernsteuern. Beispielsweise wird selbsttätig erkannt, ob ein Motor oder eine Beleuchtungseinrichtung angeschlossen ist. Auch eine selbsttätige Erkennung von installierter Lampenleistung und der Art der Lichtquelle, z.B. Gasentladungslampe, Halogenstrahler, Lichtbogenlampe oder Normal-Glühlampe, wird erfindungsgemäß ermöglicht.

Die Vereinfachung der Montage ist neben der Vereinfachung und Verbesserung der Adressierung ein weiterer wesentlicher Gesichtspunkt für Steuersysteme in großen Gebäuden. Hier fällt eine besonders hohe Anzahl von Beleuchtungskörpern und/oder Verbrauchern an, bei deren Anzahl eine vereinfachte Endmontage besonders wünschenswert ist. Mit der Erfindung werden sowohl der Zeitaufwand als auch die technische Qualifikation der installierenden Personen auf ein Minimum gesenkt. Der Arbeitsaufwand zum Anschluß eines fernsteuerbaren Verbrauchers beschränkt sich auf den Anschluß einer dreiadrigen Versorgungsleitung (Phase, Null, Erde) sowie (falls nicht gemäß Anspruch 7 eine gemeinsame Steuer- und Versorgungsleitung vorgesehen ist) auf den Anschluß einer weiteren zweiadrigen Steuerleitung bzw. eines Infrarotempfängers. Bereits jetzt ist das System vollständig betriebsbereit, weitere Einstellarbeiten vorort entfallen.

Die erfindungsgemäß mögliche sofortige Erkennung und Identifizierung eines soeben montierten Verbrauchers anhand einer Ursprungsadresse, die eine Produktionsnummer aufweist, bedingt in der Regel eine relativ lange Ursprungsadresse. Für den Betrieb einer besonders hohen Anzahl von Verbrauchern ist die Weiterverwendung dieser Adresse unvorteilhaft, sie kann daher durch eine geeignetere Betriebsadresse ersetzt werden, die neben ihrer Kürze eine zusätzlich verbesserte Bedienung des Systems gewährt. Diese verbesserte Bedienung liegt in Sammelbefehlen bzw. in Gruppensteuerungen; bestimmte Befehle werden dann nicht nur von einem einzelnen Empfänger mit zugeordnetem Verbraucher empfangen und ausgeführt, sondern gleich von einer Vielzahl von Verbrauchern. Dies bewirkt eine Verkürzung der Reaktionszeiten sowie eine Vereinfachung der Steuerung und Bedienung des Systems.

Schließlich ermöglicht die Erfindung eine jederzeitige beliebige Erweiterung des Systems, indem zusätzliche Verbraucher lediglich an ein bestehendes System angeschlossen werden, die neu hinzugekommenen Verbraucher können nach Montage auf einfachste Weise vom Befehlsgeber identifiziert und entweder einer bereits bestehenden Gruppe oder Untergruppe zugeordnet werden, oder ihnen können neue Gruppen zugewiesen werden.

In kostengünstiger Ausführung wird der elektrisch lesbare zweite Speicher durch ein mechanisches Speicherelement, beispielsweise durch mechanische jumper oder DIL-Schalter gebildet. Mit ihnen wird ein binäres Digitalwort gebildet, von beispielsweise 6, 8 oder 16bit, anhand welchem der jeweilige Verbraucher erkennbar ist. Die Erkennung kann sich dabei auf eine Produktionsnummer beschränken, sie kann jedoch auch eine weitere verbraucherspezifische Kennzeichnungsadresse beinhalten, aufgrund welcher die Art des Verbrauchers für den Befehlsgeber erkennbar ist. Eine entsprechende Schalterstellung der Miniaturschalter kann bereits vorab bei der Fertigung der Empfänger bzw. Geräteeinheiten eingestellt werden.

In weiterer vorteilhafter Weiterbildung werden sowohl die Betriebsadresse als auch die empfängerspezifische Ursprungsadresse in einem gemeinsamen Speicherelement gespeichert. Die Ursprungsadresse ist hierbei vorab in dem nichtflüchtigen Speicherelement, beispielsweise einem EEPROM, enthalten, die Betriebsadresse wird gemäß Anspruch 17 zugewiesen.

Gemäß der Erfindung besteht alternativ die Möglichkeit der gemeinsamen Speicherung von Ursprungsadresse (gemäß vorteilhafter Weiterbildung mit Kennzeichnungs-Bestandteil oder mit separater Kennzeichnungsadresse) und Betriebsadresse. Im Betrieb kann daher abhängig von bestimmten Befehlen des Befehlsgebers eine dieser beiden Adressen zum Ansprechen und Identifizieren eingesetzt werden. Dies ist insbesondere bei Änderung einer gewählten Betriebsadressen-Konfiguration oder bei der Neu-In-Funktion-Setzung des Systems von Vorteil. Bleibt ein Kennzeichnungs-Bestandteil oder eine separate Kennzeichnungsadresse gemäß Anspruch 5 in jedem Empfänger unberührt, so kann die Betriebsadresse direkt die Ursprungsadresse gemäß Anspruch 20 ersetzen. Bei einem gemeinsamen Speicherelement für diese beiden Adressen kann dieses durch Überschreiben der Speicherzelle für die Ursprungsadresse mit der Betriebsadresse erfolgen.

Weitere vorteilhafte Ausgestaltungen der Erfindung, hier beispielsweise die Steuerung des Systems über separate optische Glasfasern oder die Einbeziehung eines Dimmerschaltungsteils in jeden dezentralen Empfänger, sind in den Unteransprüchen angegeben.

Nachfolgend wird die Erfindung anhand von Ausführungsbeispielen näher erläutert. Es zeigen
- Fig. 1: ein erfindungsgemäßes Steuersystem mit einem Befehlsgeber sowie vier dezentralen in verschiedenen Räumen angeordneten Empfängern mit zugeordneten Verbrauchern,
- Fig. 2: ein Detail-Blockschaltbild eines der Empfänger mit zugeordnetem Verbraucher von Fig. 1,
- Fig. 3: beispielhaft den Inhalt von Speicherzellen in einem Speicher eines der Empfänger von Fig. 1 oder Fig. 2,
- Fig. 4: ein Detail-Blockschaltbild eines erfindungsgemäßen Befehlsgebers, wie er in Fig. 1 gezeigt wird,
- Fig. 5: ein Detail-Blockschaltbild analog zu Fig. 2, diesem Empfänger ist jedoch anstelle eines Verbrauchers ein Sensorteil zugeordnet,
- Fig. 6: beispielhaft die Speicherzellen eines Speichers in einem erfindungsgemäßen Empfänger gemäß Fig. 2 oder gemäß Fig. 5, vor bzw. nach Inbetriebnahme des Systems von Fig. 1,
- Fig. 7: beispielhaft einen Verfahrensablauf in pascalähnlicher Notation zur Inbetriebnahme eines Steuersystems gemäß Fig. 1.

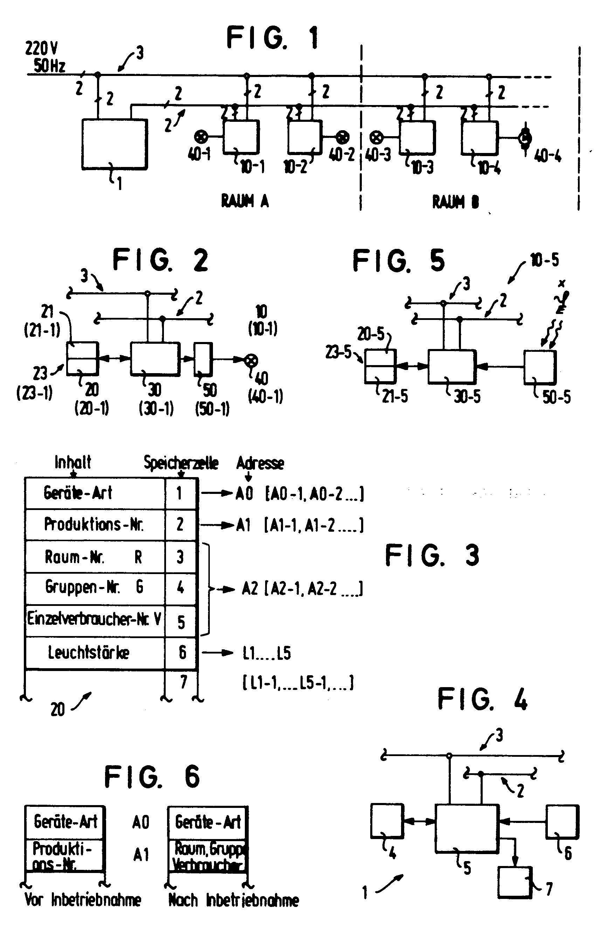

Fig. 1 zeigt ein Blockschaltbild des Systems mit einer Versorgungsleitung 3 und einer Steuerleitung 2. Ein Befehlsgeber 1 ist sowohl mit der Versorgungsleitung 3 als auch mit der Steuerleitung 2 verbunden. Mehrere in verschiedenen Räumen eines Gebäudes angeordnete elektrische Verbraucher 40-1, 40-2, 40-3 und 40-4 sind über je einen Empfänger 10-1, 10-2, 10-3 und 10-4 sowohl an die Versorgungsleitung 3 wie auch an die Steuerleitung 2 angeschlossen. Als Verbraucher finden beliebige elektrische Verbraucher Anwendung, Fig. 1 zeigt beispielsweise Beleuchtungseinrichtungen 40-1, 40-2 und 40-3, die u.a. Glühlampen oder Gasentladungslampen sein können. Als elektrischer Verbraucher kann auch ein Elektromotor 40-4 Einsatz finden, der beispielsweise eine Jalousiesteuerung übernimmt oder Türen öffnen kann. Die gezeigten Verbraucher werden im folgenden mit der Bezugsziffer 40 allgemein angesprochen, ebenso werden Empfänger allgemein mit der Bezugsziffer 10 bezeichnet.

In einem weiteren, nicht dargestellten Ausführungsbeispiel der Erfindung sind die Versorgungsleitung und die Steuerleitung identisch, Steuersignale werden hierbei hochfrequent, beispielsweise in PCM- oder FM-Technik über die niederfrequente (50Hz) Versorgungsleitung geführt. Als weitere erfindungsgemäße Variante kann anstelle der Steuerleitung 2 ein optisches Lichtfaserkabel treten, das entweder von einem Befehlsgeber 1 jeweils zu einem Empfänger 10 geführt wird, oder welches als Ringleitung ausgelegt ist. Alle Empfänger speisen und empfangen im letzteren Fall aus derselben Steuerleitung. Auch kann die Steuerung der Empfänger 10 bzw. der daran angeschlossenen Verbraucher 40 drahtlos über Sender, beispielsweise Infrarot- oder Ultraschallsender im Befehlsgeber 1 erfolgen. Hierfür können mehrere unabhängige, insbesondere transportable Befehlsgeber eingesetzt werden. Die Empfänger 10 weisen hierbei Empfangs-Zusatzmodule auf, die an ein jeweiliges Steuerteil 30 anschließbar sind. Wenn ein bidirektionaler Betrieb gewünscht ist, d.h. die jeweiligen Steuerteile 30 auch Adressen oder Daten an den (oder die mehreren) nicht ortsfesten Befehlsgeber 1 senden sollen, ist sowohl ein Empfangs-Zusatzmodul als auch ein Sender-Zusatzmodul in dem (den) Befehlsgeber(n) 1 und dem (den) Empfänger(n) 10 vorzusehen.

Beide Varianten sind auch gemeinsam realisierbar, sowohl die Inbetriebnahme (Adressenvergabe) von einem ortsfesten Befehlsgeber 1 als auch der regelmäßige Betrieb (die Steuerung der Empfänger 10) von den (dem) nicht ortsfesten Befehlsgeber(n) 1. Das Empfänger-Zusatzmodul zur Aufnahme der drahtlosen Funk/Licht-Steuersignale kann hierbei auch in einem ortsfesten Befehlsgeber 1 angeordnet sein, von hier werden die drahtlosen Signale in Steuersignale umgesetzt, die die Empfänger 10 über die Steuerleitung 2 oder über die Versorgungsleitung 3 erreichen.

Die Funktion eines gemäß Fig. 1 gezeigten Steuersystems wird dadurch ermöglicht, daß jedem Empfänger und demzufolge jedem diesem zugeordneten Verbraucher eine bestimmte verbraucherspezifische Betriebsadresse zugewiesen wird. Der Befehlsgeber 1 ist dabei in der Lage, jeden einzelnen Verbraucher oder, wie später beschrieben werden soll, einzelne Gruppen bzw. Untergruppen von Verbrauchern gemeinsam anzusteuern. Die Empfänger 10 sind in der Lage, sowohl Befehle des Befehlsgebers 1 zu empfangen, wie auch auf diese Befehle durch Ansteuerung der von dem Befehlsgeber 1 angesprochenen Verbraucher zu reagieren oder - auf besondere Befehle - Informationen über die Steuerleitung 2 dem Befehlsgeber 1 zurückzusenden.

Der Verbraucher 40-1, der von dem Empfänger 10-1 angesteuert wird und dem eine (oder mehrere parallele) Adresse(n) A1-1 (s. Fig. 3) zugeordnet ist (sind), befindet sich in einem gemeinsamen Leuchtengehäuse. Ebenso befindet sich beispielsweise der Motor 40-4 sowie der zugehörige Empfänger 10-4 in einem Jalosiegehäuse. Hieraus wird ersichtlich, daß einzelne Geräteeinheiten bereits vor der Installation vor Ort funktionsfertig geliefert werden können und direkt von Hilfspersonal installiert werden können. Insbesondere für Deckenlichtbänder in Großraumbüros ist diese vereinfachte Montage sowie die später zu beschreibende vereinfachte Adressierung der einzelnen Leuchten von großer Wichtigkeit.

Fig. 2 zeigt ein Detail-Blockschaltbild eines der in Fig. 1 gezeigten Empfänger 10. Hierbei sind wieder die Versorgungsleitung 3 und die Steuerleitung 2 erkennbar, die wie bereits anhand von Fig. 1 beschrieben, auch in einer gemeinsamen Versorgungs- und Steuerleitung zusammengefaßt werden können. Im folgenden soll beispielhaft der Empfänger 10-1 mit dem zugeordneten Verbraucher 40-1 beschrieben werden. Er weist ein Steuerteil 30-1 auf, das die Kopplung zwischen Steuerleitung 2 und Versorgungsleitung 3 übernimmt. Dieser Steuerteil 30-1 (Buscontroller) hat Zugriff zu einem Speicher 20-1, der Daten sowie Adressen enthält, die diesen Empfänger 10-1 identifizieren. Der Buscontroller 30-1 steuert über eine Ansteuerschaltung 50-1, die beispielsweise ein Relais, ein Triac oder eine Dimmerschaltung sein kann, den zugehörigen Verbraucher 40-1. Die in Fig. 2 speziell bezeichneten Baugruppen bzw. Schaltungsteile Speicher, Buscontroller, Ansteuerschaltung sowie der zugehörige Verbraucher sind im folgenden allgemein mit den Bezugsziffern 23, 30, 50 und 40 bezeichnet, da sie in jeder angeschlossenen Baugruppe (s. Fig. 1) vorgesehen sind, auf eine spezielle Bezeichnung in Form des angefügten "-1" oder "-2" wird aus Gründen der Allgemeinheit im folgenden verzichtet. So bezeichnet beispielsweise 30-3 den Buscontroller des Empfängers 10-3, 40-4 bezeichnet den Verbraucher, der dem Empfänger 10-4 zugeordnet ist, diese Elemente sind allgemein mit den Bezeichnungen 30, 40 bzw. 10 bezeichnet.

Der Speicher 23 ist als gemeinsames Speicherelement ausgeführt, d.h. ein schreib- und weiderbeschreibbarer, nichtflüchtiger Speicher mit beispielsweise 2Kbyte-Speicherplatz. Er weist eine vorgegebene Datenbreite auf, beispielsweise 8bit. In ihm werden sowohl die Betriebsadresse als auch die Ursprungsadresse für den jeweiligen Empfänger gespeichert. Es ist jedoch ebenso möglich, den Speicher in zwei getrennte Speicher zu teilen, wovon der eine Teilspeicher 21 die Ursprungsadresse speichert und der zweite Teilspeicher 20 die Betriebsadresse speichert. Die Ursprungsadresse kann, da sie in der Regel aus einem Digitalwort (8bit oder 6bit) besteht, auch durch ein mechanisches (kostengünstiges) Speicherelement gebildet sein. Mit diesem wäre bei der Fertigung durch eine bestimmte Schalterkonfiguration eine Einstellung sowie eine optische Kontrolle der Einstellung jederzeit möglich. Die Einstellung, beispielsweise eines DIL-Schalters mit acht Schalterelementen. könnte aufgrund der in der Geräteeinheit montierten Lampenart erfolgen. Das eingestellte Digitalwort kann von dem Steuergerät 30 (bus controller) nun genauso gelesen werden, wie die parallel hierzu in den zweiten Teilspeicher 20 zu schreibende Betriebsadresse.

Fig. 3 zeigt beispielhaft den Inhalt von Speicherzellen, wie sie in einem gemeinsamen Speicher 23 eines Empfängers 10 vorliegen. Hierbei sind mehrere Adressen A0, A1, A2 sowie Leuchtstärkedaten L1...,L5 vorgesehen. Die Kennzeichnungsadresse A0 bezeichnet im vorliegenden Fall die Geräteart, die Ursprungsadresse A1, eine eindeutige, verbraucherspezifische Produktionsnummer. Als Betriebsadresse A2 findet die Kombination aus einer Raumnummer R, einer Gruppennummer G und einer Einzelverbrauchernummer V Anwendung. Eine vorgegebene Anzahl von Fix-Leuchtstufen, beispielsweise 5, können voreingestellt sein und gegebenenfalls über Kurzbefehle vom Befehlsgeber 1 aktiviert werden. Diese Fix-Leuchtstufen sind bei digitaler Steuerung aus einer gegebenen maximalen Anzahl (bei 8bit sind dies 256, bei 6bit sind dies 64 Leuchtstufen) von Leuchtstufen gewählt sein. Beispielsweise kann L1 die Notbeleuchtung, L2 eine Dia-Beleuchtung usw. einstellen. Die Fix-Leuchtstufen können bereits bei der Fertigung der Geräteeinheiten oder Empfänger entsprechend den Ursprungsadressen vorprogrammiert sein. Die freie Wahl aller (diskret) möglichen Leuchtstufen (256, 64 ...) ist aber neben der Kurz-Anwahl ebenso möglich. Zur Variation der Leuchtstärke ist in Fig. 2 eine Dimmerschaltung 50 erforderlich, ein Relais kann diese Aufgabe nicht erfüllen.

Die Adressenbezeichnungen A0, A1 und A2 gelten allgemein für alle Empfänger 10, in deren jeweiligen Speichern 23 sie sich befinden. Die speziellen Adressen eines Empfängers, beispielsweise des Empfängers 10-3 werden mit A0-3, A1-3 sowie A2-3 bezeichnet. Dieses Bezeichnungssystem wird entsprechend dem von Fig. 2 und Fig. 1 gewählt.

Vor der Installation bzw. Montage der einzelnen Empfänger 10 mit ihrem jeweils zugeordnetem Verbraucher 40 ist in dem jeweiligen Speicher 23 bereits die Adresse A0 (Geräteart, Kennzeichnungsadresse) sowie die Adresse A1 (Produktionsnummer, Ursprungsadresse) enthalten. Als Speicher findet dabei vorzugsweise ein EEPROM Anwendung, jedoch ist auch jeder weitere Speichertyp einsetzbar, der eine langfristige und änderbare Speicherung ermöglicht (nichtflüchtige Speicher). Beispielsweise ist dies ein batteriegepuffertes CMOS-RAM. Die Geräteart A0 sowie die Produktionsnummer A1 werden als Kennzeichnungs- bzw. Ursprungsadresse bezeichnet, die Kombination aus Raumnummer R, Gruppennummer G und Einzelverbrauchernummer V wird als Betriebsadresse A2 bezeichnet. Vor Montage befindet sich in den Speicherzelle(n) der Betriebsadresse zunächst die Werte Null bzw. R=0, G=0 und V=0.

Das Beleuchtungssystem wird dadurch in Betrieb genommen (in Funktion gesetzt), daß der Befehlsgeber 1 ein Kommando an alle Empfänger sendet, die jeweiligen Adressen mitzuteilen. Für den Fall eines neu installierten Systems bzw. für den Fall eines an ein bestehendes System hinzugefügten Empfängers mit zugeordnetem neuen Verbraucher senden diese ihre jeweilige Geräteart und Produktionsnummer, mithin die Adressen A0 und/oder A1. Dies erkennt der jeweilige Buscontroller 30 an den Werten Null für die Systemadresse A2. Diejenigen Geräte, die bereits in Betrieb genommen waren, senden ihre Systemadresse A2. Von dem Befehlsgeber 1, der sich aus den von allen angeschlossenen Empfängern gesendeten Adressen zunächst eine auswählt, wird nun eine Gruppierung oder Einteilung der Empfänger 10 vorgenommen.

Für Empfänger, die noch keine Betriebsadresse A2 aufweisen, wird die Ursprungsadresse A1 (Produktionsnummer) durch eine entsprechende Betriebsadresse A2 (Kombination aus R, G und V) ersetzt. Dies geschieht entweder dadurch, daß die Werte Null in den Speicherzellen, welche die Raumnummer R, die Gruppennummer G und die Einzelverbrauchernummer V enthalten, durch eine von Null verschiedene Zahl (binäres oder hexadezimales Datenwort) ersetzt wird oder dadurch, daß in der Speicherzelle für die Produktionsnummer (Ursprungsadresse), die Zusammensetzung R-G-V der Raumnummer R, der Gruppennummer G und der Einzelverbrauchernummer V eingespeichert wird. Die Betriebsadresse A2 ersetzt im zweiten Falle direkt die Ursprungsadresse A1, während im ersten Falle beide Adressen nebeneinander im Speicher 23 gespeichert werden. Der Buscontroller wird bei Vorhandensein einer Betriebsadresse A2 in der Regel diese auswählen, nur für spezielle Befehle kann er auf die Produktionsnummer (Ursprungsadresse) zurückgreifen (die auch in einem separaten Speicher 21 gespeichert sein kann). Der Fall der direkten Ersetzung der Produktionsnummer durch die R-G-V-Adresse wird von Fig. 6 dadurch gezeigt, daß der entsprechende Speicherinhalt in Fig. 3 einmal vor der Inbetriebnahme und einmal nach der Inbetriebnahme dargestellt ist. Die Geräteart (Kennzeichnungsadresse A0) bleibt hiervon unberührt, da der Verbraucher sich nicht geändert hat und dieser Adressen-Bestandteil relativ kurz ist.

Fig. 4 zeigt das Detail-Blockschaltbild eines Befehlsgebers 1 von Fig. 1. Er weist ebenfalls einen Steuerteil 5 auf, der die Ankopplung an die Versorgungsleitung 3 sowie die Steuerleitung 2 durchführt. Der Steuerteil 5 kann als Buscontroller auf gleiche Weise aufgebaut sein, wie der Buscontroller 30 jedes Empfängers. Da Buscontroller in der Regel bidirektional arbeiten, wird auf diese Weise ermöglicht, daß die Steuerleitung von beiden Buscontrollern in beiden Richtungen verwendet werden kann. An den Buscontroller 5 ist ein zentraler Speicher 4 angeschlossen, der ebenso wie der Speicher 23 jedes Empfängers aufgebaut werden kann. Dieser Speicher 4 weist jedoch eine größere Speicherkapazität auf, da in ihm Informationen, d.h. Daten und Adressen aller am System angeschlossenen Empfänger 10 (Verbraucher 40) enthalten sind. Der Befehlsgeber 1 weist weiterhin einen Bedien- und Eingabeschaltteil 6 auf, mit dem dem Buscontroller 5 und damit dem System Befehle und Informationen zugeführt werden können. Eine Anzeigeeinrichtung 7, auch Display genannt, ermöglicht die Anzeige von Systemparametern, wie Adressen, angeschlossener Verbraucheranzahlen sowie von Leuchtstärken oder installierter und betriebener Gesamtleistung. Ferner kann durch sie optisch unterstützt die anwenderspezifische Vergabe der Betriebsadressen A2 in Form der Gruppennummer G, der Raumnummer R und der Einzelverbrauchernummer V durchgeführt werden.

Der in Fig. 3 gezeigte Speicherinhalt eines Speichers 23 in einem Empfänger 10 findet in dem Speicher 4 sein Spiegelbild. Der Befehlsgeber 1 ist nach Installation und Inbetriebnahme über alle angeschlossenen Verbraucher informiert, er kennt ihre jeweiligen Gerätearten, die Produktionsnummer sowie die ihnen bei der Installierung zugeordneten Betriebsadressen (R-G-V-Adresse). Auch ist der Befehlsgeber 1 über die von den Empfängern 10 einstellbaren Fix-Helligkeitsstufen bzw. Leuchtstärken L1,...,L5 informiert. Eine solche Kopie der gesamten Kennwerte des installierten Systems verringert die Zugriffszeiten und vermeidet laufende Busabfragen über die Steuerleitung 2, falls eine Bedienperson von dem Befehlsgeber 1 über die Anzeigeeinrichtung 7 Systemparameter in Erfahrung bringen möchte.

Fig. 5 zeigt beispielsweise einen Empfänger 10-5, der als Meßgeber eingesetzt wird. Er weist einen Buscontroller 30-5 sowie einen mit diesem verbundenen Speicher 23-5 auf. Diese beiden Baugruppen entsprechen jenen von Fig. 2. An der Stelle der in Fig. 2 gezeigten Ansteuerschaltung 50-1 (Dimmerschaltung) und des Verbrauchers 40-1 findet hier ein Sensor 50-5 Anwendung, der dem Buscontroller 30-5 eine beliebige Meßgröße vor Ort mitteilt. Die Meßgröße kann beispielsweise die Helligkeit, die Temperatur oder irgendeine andere wichtige Information sein, die für den Befehlsgeber und das System von Wichtigkeit ist. Der Anschluß des Buscontrollers 30-5 an das Steuersystem erfolgt über dieselbe Versorgungsleitung 3 sowie dieselbe Steuerleitung 2. Die von dem Sensor 50-5 erfaßte Meßgröße wird auf diese Weise dem Befehlsgeber 1 zugänglich.

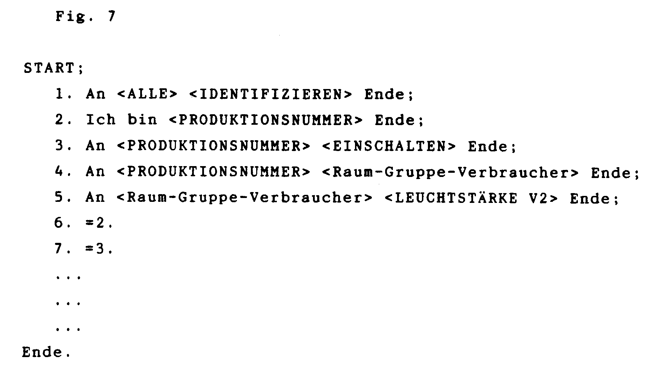

Anhand von Fig. 7 soll ein Verfahren zum In-Funktion-Setzen des beschriebenen Steuersystems erläutert werden. Der Ablauf ist in groben Zügen folgendermaßen:
1. Produktion und Fertigung der Empfänger 10 mit jeweils zugeordneten Verbrauchern 40 sowie Fertigung von bereits integrierten Kombinationsgeräten, die neben dem Verbraucher 40 einen Empfänger 10 in einem gemeinsamen Gehäuse eingebaut haben,
2. mechanische und elektrische Installation vor Ort,
3. Test,
4. Zuweisung einer Betriebsadresse (Adresse R-G-V) zum Ersatz der unter Punkt 1 in die Speicher 23 oder 20 (bei separaten Teil-Speichern) der Empfänger 10 eingespeicherten Ursprungsadresse A0, A1 (Geräteart und Produktionsnummer) durch die Betriebsadresse A2 (R-G-V-Adresse),
5. Betrieb des erfindungsgemäßen Steuersystems.

Der Vorteil des erfindungsgemäßen Verfahrens beruht zum einen auf dem Wechsel von Ursprungsadresse zur Betriebsadresse. Hierbei ist, wie zuvor beschrieben wurde, ein gemeinsamer lesbarer und beschreibbarer Speicher 23 oder ein erster in jedem Empfänger eingesetzt, der dieses ermöglicht. Der weitere wesentliche Vorteil beim In-Funktion-Setzen liegt nun darin, daß die Vergabe und/oder der Austausch der Adressen von einem zentralen Befehlsgeber, der an einem beliebigen Ort an die Steuerleitung sowie die Versorgungsleitung angeschlossen werden kann, erfolgt. Hierdurch wird vermieden, daß umständliche Einstellarbeiten an bereits montierten Geräten oder Beleuchtungskörpern erfolgen müssen, wenn das System entweder erstmalig in Betrieb genommen wird oder wenn das System erweitert oder in seiner Gruppierung der Verbraucher geändert wird. Lichtquellen 40-1,40-2,40-3 und Verbraucher 40-4, die an schwer zugänglichen Orten angebracht sind, müssen nicht mehr abgebaut werden, sie verbleiben an ihrer Stelle, ein Zugriff zu diesen Verbrauchern vorort ist beim In-Funktion-Setzen und bei der Neueinstellung eines erfindungsgemäßen Systems überflüssig. Neben der Flexibilität und der Verringerung des Aufwandes gewährt das In-Funktion-Setzen des vorher beschriebenen erfindungsgemäßen Systems eine Reduzierung der Verletzungsgefahr. Dies deshalb, da zum In-Funktion-Setzen und zur eventuellen späteren Änderung eines bereits in Betrieb genommenen Systems kein Personal über Leitern zu den Verbrauchern oder Beleuchtungskörpern hinaufsteigen muß. Es müssen ferner weder Abdeckungen noch Gehäuse geöffnet werden, womit auch die Gefahr elektrisch bedingter Verletzungen, direkt und indirekt entfällt.

Unter Ziff. 2 war die Installation des Systems erwähnt, diese besteht in der Erstmontage der Verbraucher 40, das betrifft sowohl mechanische als auch elektrische Installation. Ein Testlauf bzw. Testbetrieb schließt sich an, alle Geräte werden vom Befehlsgeber 1 angesprochen und es ist sofort erkennbar, ob einzelne Geräte funktionsfähig sind und korrekt angeschlossen sind. An die Testphase schließt sich die Inbetriebnahme an, diese ist unter Ziff. 3 zusammengefaßt und in Fig. 7 in einem pascalähnlichen Verfahrensablauf erläutert. Die in dreieckigen Klammern stehenden Symbole bezeichnen im Betrieb und beim In-Funktion-Setzen digitale Binärsignale von beispielsweise 8bit, die entweder elektrisch oder optisch über die Steuerleitung 2 oder hochfrequent über die Versorgungsleitung 3 von und zu den Empfängern 10 und dem Befehlsgeber 1 gesendet bzw. empfangen werden. So bezeichnet <Identifizieren> ein (oder mehrere) mehrstellige(s) digitale(s) Binärwort(e), das (die) eindeutig von anderen Binärworten unterscheidbar ist (sind) und so von den Empfängern als Befehl korrekt interpretiert werden kann (können). Hierbei ist sichergestellt, daß beispielsweise <Produktionsnummer> direkt und eindeutig unterscheidbar ist von beispielsweise dem Befehl <Einschalten>. Zunächst geht von dem Befehlsgeber 1 der Befehl an <alle> Verbraucher, sich durch Mitteilung ihrer Adressen zu <Identifizieren>. Diejenigen Verbraucher, welche bereits in einem vorhergehenden Inbetriebnahmeverfahren eine Betriebsadresse A2 zugeteilt bekamen, senden diese Adresse. Diejenigen Verbraucher, welche neu im System sind, senden ihre Produktionsnummer und/oder eine Kennung, die den jeweiligen Verbraucher 40 bzw. ihre Geräteart kennzeichnet. Die Unterscheidung, welche Adresse zu senden ist, trifft der jeweilige Buscontroller 30. Der Befehlsgeber 1 nimmt über einen gleichartigen Buscontroller 5 die zuerst ankommende <Produktionsnummer> auf und schaltet über einen entsprechenden Befehl an die soeben empfangene <Produktionsnummer> diese Lampe <hell> bzw. diesen Verbraucher <ein>. Dies ist unter Schritt 3 von Fig. 7 gezeigt. Schritt 2 von Fig. 7 zeigt dabei nur das Eintreffen einer <Produktionsnummer> eines Empfängers, die anderen gleichzeitig oder wenig später gesendeten <Produktionsnummern> werden zunächst nicht berücksichtigt, sie werden in den Schritten 6, 7 etc. nacheinander abgearbeitet. Dies bedeutet, daß ein Verbraucher mit Empfänger solange die <Produktionsnummer> sendet, bis ihm der unter Ziffer 3 beschriebene Einschaltbefehl zukommt. Die Synchronisation und Überprüfung, ob ein Befehl oder eine Kennung auf die Steuerleitung 2 geschaltet werden kann bzw. gesendet werden kann, trifft der jeweilige Buscontroller 30 bzw. 5.

Nun wird ausgehend von einem vorgegebenen Plan, eine Betriebsadresse A2 gewählt, die der Befehlsgeber 1 dem ausgewählten Verbraucher 40 mitteilt. Diese Betriebsadresse setzt sich zusammen aus einer Kombination von Gruppen und Untergruppen sowie von Einzelverbrauchern. Eine mögliche Gruppierung wäre beispielsweise jene, daß unterteilt wird in Raumnummer R, Gruppennummer G und Einzelverbrauchernummer V, so daß über einen einzelnen Befehl mehrere Verbraucher einer gemeinsamen Gruppe gleichzeitig angesprochen werden können. Ein einzelner Befehl kann auf diese Weise alle Verbraucher (Beleuchtungskörper) eines Raumes einschalten (hellschalten) oder abschalten. Die Gruppennummer G bezeichnet eine Untergruppe des Raumes R, beispielsweise Beleuchtungen für einzelne Tischgruppen oder Schreibtische; die Einzelverbrauchernummer V letztendlich erlaubt es, jeden einzelnen Verbraucher individuell anzusprechen. Eine andere mögliche Gruppierung wäre beispielsweise nach Stockwerk, Raum und Einzelverbraucher, hierbei wäre es möglich, die Beleuchtung eines gesamten Stockwerks mit einem Befehl ein- bzw. abzuschalten sowie die Beleuchtung oder Verbraucher einzelner Räume zu steuern. Auch ist die Gruppierung nach Stockwerk oder Raum oder Gruppe nicht auf Räume oder Gebäude beschränkt, beispielsweise sind einzelne Wege oder Zufahrtsstraßen zu Gebäuden sowie Gebäudebeleuchtungen über die Gruppeneinteilung zu einer Gruppe zusammenfaßbar und gemeinsam ansprechbar. Eine einmal gewählte Staffelung kann mit dem Steuersystem mehrfach beliebig geändert werden.

Neben der Zuweisung einer Betriebsadresse in Form der gestaffelten Raum/Gruppe/Einzelverbraucher-Adresse (R-G-V-Adresse), wie sie unter 4. von Fig. 7 geschieht, können in jedem Verbraucher verschiedene Fix-Leuchtstärken zugewiesen werden. Eine durch die Digital- Wortbreite vorgegebene Maximalzahl von Helligkeitsstufen (8bit entsprechen 250 Stufen), auch unterschiedliche Drehzahlen oder Positionswerte von Antrieben, können unabhängig hiervon eingestellt werden. Die zugewiesenen Fix- Helligkeitsstufen sind später durch Kurz-Befehle abrufbar und beliebig änderbar. Werden dem System mit den Ursprungsadressen auch Ursprungs-Fix-Leuchtstärkewerte bzw. vorgegebene Leistungsstufen L1,L2...L5 eingespeichert, so ist nach Montage der Verbraucher am System mit dem Steuergerät nicht nur die Wahl zwischen Einschalten und Ausschalten, sondern bereits die Einstellung mehrerer Helligkeitsstufen möglich.

Bei Schritt 6, 7ff. von Fig. 7 werden die unter Schritt 2 bis Schritt 5 aufgeführten Steuersignale bzw. Befehlssequenzen solange durchgeführt, bis allen Empfängern eine Betriebsadresse, gegebenenfalls neue Fix- Leuchtstärken, zugewiesen sind. Bei Schritt 5 war nur die Zuweisung einer <Leuchtstärke V2> gezeigt, es ist jedoch auch möglich, mehrere Fix- Leuchtstärken nacheinander zuzuweisen, so daß unterschiedliche Helligkeitsstufen auf Befehl des Befehlsgebers zu gegebener Zeit eingestellt werden können. Die hierzu erforderlichen Dimmer oder ähnlichen Schaltkreise 50 befinden sich jeweils im Empfänger 10 bzw. bei dem Verbraucher 40.

Es war bereits die Möglichkeit gezeigt, über Generalbefehle einzelne Gruppen, Räume oder Stockwerke ansprechen zu können, dieses ist bei entsprechendem Speicheraufwand in dem Speicher 4 des Befehlsgebers ebenfalls möglich, wenn keine Betriebsadressen vergeben werden. Der Befehlsgeber 1 muß hierbei einzelne Gruppen anhand ihrer jeweiligen Produktionsnummer (Ursprungsadresse) zusammenfassen und bei einem Gruppenbefehl bzw. Generalbefehl, der eine dieser im Speicher 4 als Gruppe zusammengefaßten (kenntlichgemachte) Gruppen ansprechen soll, jeden einzelnen Verbraucher über seine jeweilige Ursprungsadresse nacheinander ansteuern. Dies ist zwar möglich, jedoch unpraktisch und zeitraubend. Man benötigt hierfür hohe Übertragungsraten, die einerseits das System verteuern und andererseits die Störanfälligkeit vergrößern. Hierfür ist die Wahl von kurzen gestaffelten Betriebsadressen besonders vorteilhaft.

Es sei noch angemerkt, daß die Darstellung von fünf Fix-Leuchtstärken L1...L5 beispielhaft zu verstehen ist, jedoch eine beliebige Zahl von Fix- Leuchtstärken bzw. Fix- Verbraucherleistungen eingesetzt und vorgegeben werden können.

## Patentansprüche

1. Steuersystem für mehrere verteilt anzuordnende Verbraucher, insbesondere Beleuchtungskörper,
mit einem oder mehreren Befehlsgebern (1),
mit einem jedem Verbraucher (40) zugeordneten Empfänger (10),
mit einer Steuerleitung (2), welche den Befehlsgeber (1) mit jedem Empfänger (10) verbindet,
mit einem ersten Speicher (20) in jedem Empfänger (10), in den eine Betriebsadresse (A2) für den zugeordneten Verbraucher (40) durch elektrische Signale einschreibbar ist, und
mit einem in jedem Empfänger (10) vorgesehenen Steuerteil (30,50), mittels welchem der diesem (10,30,50) zugeordnete Verbraucher (40) von dem Befehlsgeber (1) steuerbar ist, wenn sie (10,30,50) zuvor durch Anwahl der Betriebsadresse (A2) des diesen zugeordneten Verbrauchers (40) aktiviert worden sind,
dadurch **gekennzeichnet,**
daß in jedem Empfänger (10) ein elektrisch lesbarer zweiter Speicher (21) vorgesehen ist, der eine empfängerspezifische Ursprungsadresse (A1) enthält, wobei die Ursprungsadresse (A1) eine Produktionsnummer aufweist.

2. Steuersystem nach Anspruch 1,
dadurch **gekennzeichnet,**
daß der erste und der zweite Speicher (20,21) jedes Empfängers (10) durch verschiedene Speicherzellen eines gemeinsamen Speicherelementes (23) repräsentiert sind.

3. Steuersystem nach Anspruch 1 oder 2,
dadurch **gekennzeichnet,**
daß der erste Speicher (20) bzw. das Speicherelement (23) in jedem Empfänger (10) durch elektrische Signale lösch- und wiederbeschreibbar ist.

4. Steuersystem nach Anspruch 1
dadurch **gekennzeichnet,**
daß die Betriebsadresse (A2) und die Ursprungsadresse (A1) aus dem ersten und zweiten Speicher (20,21) jedes Empfängers (10) von dem Befehlsgeber (1) über die Steuerleitung (2) fernlesbar sind.

5. Steuersystem nach Anspruch 1,
dadurch **gekennzeichnet,**
daß die Art jedes Verbrauchers (40) anhand einer weiteren verbraucherspezifischen Kennzeichnungsadresse (A0) für den Befehlsgeber (1) erkennbar ist und
daß die Betriebsadresse (A2) eine gestaffelte Klassifizierung (R,G,V) beinhaltet, die es dem Befehlsgeber (1) erlaubt, jeweilige Gruppen (R) und Untergruppen (G) von Verbrauchern (V,40) gemeinsam anzuwählen.

6. Steuersystem nach einem der vorherstehenden Ansprüche,
dadurch **gekennzeichnet,**
daß der erste und/oder der zweite Speicher (20,21) bzw. das Speicherelement (23) ein EEPROM oder ein gepuffertes RAM sind/ist.

7. Steuersystem nach einem der vorherstehenden Ansprüche,
dadurch **gekennzeichnet,**
daß die Steuerleitung (2) gleichzeitig eine Versorgungsleitung (3) für die Verbraucher (40) ist und die Steuersignale über die Versorgungsleitung (3) gesendet werden.

8. Steuersystem nach einem der Ansprüche 1 bis 7,
dadurch **gekennzeichnet,**
daß der Steuerteil (30,50) eines Empfängers (10) einen Dimmerteil (50) aufweist, der es erlaubt, den Leistungsverbrauch, insbesondere die Helligkeit, des zugeordneten Verbrauchers (40) auf Anweisung des Befehlsgebers (1) zu variieren.

9. Steuersystem nach Anspruch 1,
dadurch **gekennzeichnet,**
daß der Befehlsgeber (1) aufweist:
einen Schreib/Lese-Speicher (4),
welcher Daten (L1,...,L5) sowie Adressen (A0,A1,A2) für jeden angeschlossenen Empfänger (10) des Steuersystems speichert,
eine Eingabe- und Bedienschaltung (6) zur manuellen Steuerung und Einstellung des Steuersystems sowie zur Vergabe von Betriebsadressen (A2) für die angeschlossenen Empfänger (10).

10. Steuersystem nach Anspruch 9,
dadurch **gekennzeichnet,**
daß eine Anzeigeeinrichtung (7) für den Befehlsgeber (1) vorgesehen ist zur Anzeige von Systemdaten, Betriebszustand sowie Betriebsadressen (A2) von angeschlossenen Empfängern (10), bzw. diesen zugeordneten Verbrauchern (40).

11. Steuersystem nach einem der vorherstehenden Ansprüche,
dadurch **gekennzeichnet,**
daß dem Empfänger (10-5) ein Sensorteil (50-5) zugeordnet ist, welches eine örtliche Meßgröße mißt und
daß die erfaßte Meßgröße über das im Empfänger (10-5) vorgesehene Steuerteil (30-5) auf Anweisung des Befehlsgebers (1) diesem über die Steuerleitung (2) mitgeteilt wird.

12. Steuersystem nach Anspruch 1,
dadurch **gekennzeichnet,**
daß für eine aus Empfänger (10) und Verbraucher (40) bestehende Geräteeinheit, insbesondere für eine Lampeneinheit, die Ursprungsadresse (A1) sowohl die Produktionsnummer als einen Identifizierungs-Bestandteil als auch einen Kennzeichnungs- Bestandteil aufweist, wodurch die Geräteeinheit im Steuersystem eindeutig und gemäß ihrer Verbraucherart ansprechbar und betreibbar ist.

13. Steuersystem nach Anspruch 1,
dadurch **gekennzeichnet,**
daß die Steuerleitung (2) aus optisch leitendem Material gebildet ist und der Befehlsgeber (1) die angeschlossenen Empfänger (10) über bidrektionelle optische Steuersignale steuert oder
daß die angeschlossenen Empfänger (10) von einem oder mehreren Befehlsgebern (1), insbesondere nicht ortsfesten Befehlsgebern (1), über Infrarotsignale bidirektionell oder unidirektionell steuerbar sind.

14. Steuersystem nach Anspruch 1 bzw. nach Anspruch 5,
dadurch **gekennzeichnet,**
daß die empfängerspezifische Ursprungsadresse (A1) bzw. die verbraucherspezifische Kennzeichnungsadresse (A0), in einem mechanischen Speicherelement, insbesondere einem Mehrbit-DIL- Schalter, gespeichert ist/sind.

15. Steuersystem nach Ansprüch 1,
dadurch **gekennzeichnet,**
daß in dem zweiten Speicher (21) jedes Empfängers neben der empfängerspezifischen Ursprungsadresse (A1) eine verbraucherspezifische Kennzeichnungsadresse (A0), welche für den Befehlsgeber (1) die Art des Verbrauchers (40) bezeichnet, gespeichert ist.

16. Steuersystem nach Ansprüch 1,
dadurch **gekennzeichnet,**
daß für eine anschlußfertige Geräteeinheit aus Empfänger (10-1) und Verbraucher (40-1) die empfängerspezifische Ursprungsadresse (A1) einen verbraucherkennzeichnenden Kennzeichnungsbestandteil (A0) zur gemeinsamen Identifizierung und Kennzeichnung enthält.

17. Verfahren zum In-Funktion-Setzen eines Steuersystems nach einem der Ansprüche 1 bis 12,
**gekennzeichnet** durch folgende Schritte:
a) in den zweiten Speicher (21) jedes Empfängers (10) wird vor Installierung des Systems die empfängerspezifische Ursprungsadresse (A1) eingespeichert,
b) die Empfänger (10) aller Verbraucher (40) werden nach Installierung des Systems über die Steuerleitung (2) mittels des Befehlsgebers (1) aufgerufen, ihre empfängerspezifischen Ursprungsadressen (A1) zu senden,
c) der Befehlsgeber wählt eine (A1-1) der gesendeten Ursprungsadressen (A1) aus und erteilt dem dieser Adresse (A1-1) zugeordneten Verbraucher (40-1) den Befehl, sich zu identifizieren,
d) in den ersten Speicher (20-1) des dem identifizierten Verbraucher (40-1) zugeordneten Empfängers (10-1) wird mittels des Befehlsgebers (1) eine Betriebsadresse (A2-1) eingespeichert, die einer bestimmten Gruppierung (R,G,V) und/oder Anordnung der Verbraucher (40) in verschiedenen Räumen nach der Installierung des Systems Rechnung trägt,
e) die Schritte b) bis d) werden wiederholt, bis alle Betriebsadressen (A2) in die entsprechenden ersten Speicher (20) eingeschrieben sind.

18. Verfahren nach Anspruch 17,
dadurch **gekennzeichnet,**
daß alle Empfänger (10) mit ihren zugeordneten Verbrauchern (40) an einem ersten gemeinsamen Versorgungsnetz (3) angeschlossen werden und
daß das Einschreiben der Betriebsadressen (A2) von dem Befehlsgeber (1) über eine weitere gemeinsame Steuerleitung (2) durchgeführt wird.

19. Verfahren nach Anspruch 17,
dadurch **gekennzeichnet,**
daß gemäß Schritt b) die Empfänger (10), welche ihre Ursprungsadressen (A1) senden, noch keine Betriebsadresse (A2) aufweisen und
daß die Empfänger (10), welche bereits bei einem vorhergehenden In-Funktion-Setzen eine Betriebsadresse (A2) zugewiesen bekamen, diese Betriebsadresse (A2) anstelle der Ursprungsadresse (A1) senden.

20. Verfahren nach Anspruch 17,
dadurch **gekennzeichnet,**
daß die Betriebsadresse (A2) die Ursprungsadresse (A1) direkt ersetzt, wobei eine Kennzeichnungsadresse (A0) zur Bezeichnung der Art des Verbrauchers, insbesondere der Art des Beleuchtungskörpers, unverändert bleibt.

21. Verfahren nach Anspruch 17,
dadurch **gekennzeichnet,**
daß jedes Steuerteil (30, 50) auf der Basis eines Befehls des Befehlsgebers (1) entscheidet, welche der beiden Adressen (A1, A2) zu wählen ist.

22. Steuersystem für mehrere verteilt anzuordnende Verbraucher, insbesondere Beleuchtungskörper,
mit einem oder mehreren gleichwertigen Befehlsgeber(n) (1),
mit einem jedem Verbraucher (40) zugeordneten Empfänger (10),
mit einer Steuerleitung (2), welche den Befehlsgeber (1) mit jedem Empfänger (10) verbindet,
mit einem Speicher (20,23) in jedem Empfänger (10), in den eine Betriebsadresse (A2) für den zugeordneten Verbraucher (40) einspeicherbar ist, und
mit einem in jedem Empfänger (10) vorgesehenen Steuerteil (30,50), mittels welchem der diesen (10,30,50) zugeordnete Verbraucher (40) von dem Befehlsgeber (1) steuerbar ist, wenn sie (10,30,50) zuvor durch Anwahl der Betriebsadresse (A2) des diesen zugeordneten Verbrauchers (40) aktiviert worden sind,
wobei jeder Speicher (20,23) in jedem Empfänger (10) durch elektrische Signale lösch- und wiederbeschreibbar ist,
dadurch **gekennzeichnet,**
daß jeder Speicher (20,23) vor In-Funktion-Setzen des Systems eine Ursprungsadresse (A1) aufweist, die eine Erkennung und Identifizierung des Zügeordneten Verbrauchers erlaubt und nach Installierung und In-Funktion-Setzen des Systems eine jeweilige Betriebsadresse (A2) speichert, welche die jeweilige Ursprungsadresse (A1) ersetzt und
daß eine Kennzeichnungsadresse (A0) zur Bezeichnung der Art des Verbrauchers (40), insbesondere der Art des Beleuchtungskörpers, unverändert bleibt.

## Claims

1. A control system for a plurality of appliances in distributed arrangement, in particular lighting fittings, having
one or several command generators (1),
a receiver (10) associated with each appliance (40),
a control line (2) which connects the command generator (1) to each receiver (10),
a first memory (20) in each receiver (10) into which an operational address (A2) for the associated appliance (40) can be written by electrical signals, and
a control part (30, 50) provided in each receiver (10) by means of which the appliance (40) associated therewith (10, 30, 50) can be controlled by the command generator (1) if they (10, 30, 50) have been previously activated by selection of the operational address (A2) of the appliance (40) associated therewith,
characterised in that
provided in each receiver (10) is an electrically readable second memory (21) that contains a receiver-specific original address (A1), and the original address (A1) comprises a production number.

2. A control system according to claim 1, characterised in that the first and the second memory (20, 21) of each receiver (10) are represented by different memory cells of a common memory element (23).

3. A control system according to claim 1 or claim 2, characterised in that the first memory (20) or the memory element (23) in each receiver (10) can be erased and rewritten by electrical signals.

4. A control system according to claim 1, characterised in that the operational address (A2) and the original address (A1) can be read remotely by the command generator (1) via the control line (2) from the first and second memory (21, 22) of each receiver (10).

5. A control system according to claim 1, characterised in that the type of each appliance (40) can be recognised by the command generator (1) by means of a further appliance-specific characterising address (A0) and in that the operational address (A2) includes a hierarchial classification (R,G,V) which enables the command generator (1) to address in common relevant groups (R) and subgroups (G) of appliances (V,40).

6. A control system according to any one of the preceding claims, characterised in that the first and/or second memory (20, 21) or the memory element (23), is an EEPROM or backed-up RAM.

7. A control system according to any one of the preceding claims, characterised in that the control line (2) is at the same time a supply line (3) for the appliance (40) and the control signals are transmitted via the supply line (3).

8. A control system according to any one of claims 1 to 7, characterised in that the control part (30, 50) of a receiver (10) has a dimmer part (50) which makes it possible to vary the power consumption, in particular the brightness, of the associated appliance (40) when instructed by the command generator (1).

9. A control system according to claim 1, characterised in that the command generator comprises
a read/write memory (4) which stores data (L1...,L5) and addresses (A0, A1, A2) for each receiver (10) connected to the control system,
an input and operating circuit means (6) for manual control and adjustment of the control system and for allocating operational addresses (A2) for the connected receivers (10).

10. A control system according to claim 9, characterised in that a display device (7) is provided for the command generator (1) to display system data, operational state and operational addresses (A2) of connected receivers (10) or the appliances (40) associated therewith.

11. A control system according to any one of the preceding claims, characterised in that a sensor part (50-5) is associated with the receiver (10-5) which measures a local measured value and in that the detected measured value is communicated by way of the control part (30-5) provided in the receiver (10-5) on command of the command generator (1) to the command generator via the control line (2).

12. A control system according to claim 1, characterised in that for a device unit comprising a receiver (10) and appliance (40), in particular for a lamp unit, the original address (A1) has both the production number as an identifying component and a characterising component by which the device unit can be addressed and operated unmistakeably and according to its appliance type in the control system.

13. A control system according to claim 1, characterised in that the control line (2) comprises optically conductive material and the command generator (1) controls the connected receivers (10) by way of bidirectional optical control signals or, in that the connected receivers (10) can be controlled bidirectionally or unidirectionally via infrared signals from one or more command generators (1), in particular portable or mobile command generators (1).

14. A control system according to claim 1 or, as the case may be, claim 5, characterised in that the receiver-specific original address (A1) and/or the appliance-specific characterising address (A0) is/are stored in a mechanical memory element, in particular a multi-bit-DIL-circuit.

15. A control system according to claim 1, characterised in that in the second memory (21) of each receiver (10) there is stored, apart from the receiver-specific original address (A1), an appliance-specific characterising address (A0) which indicates the type of appliance (40) to the command generator (1).

16. A control system according to claim 1, characterised in that the receiver-specific original address (A1) for a ready-to-connect device unit comprising a receiver (10-1) and an appliance (40-1), contains an appliance-characterising component (A0) for simultaneous identification and characterisation.

17. A method for putting into operation a control system according to any one of claims 1 to 12, characterised by the following steps:
a) before installation of the system the receiver-specific original address (A1) is stored in the second memory (21) of each receiver (10),
b) after the system has been installed the receivers (10) of all appliances (40) are instructed via the control line (2) by means of the command generator (1) to transmit their receiver-specific original addresses (A1),
c) the command generator selects one (A1-1) of the transmitted original addresses (A1) and instructs the appliance (40-1) associated with this address (A1-1) to identify itself,
d) an operational address (A2-1) which, after installation of the system, takes account of a specific grouping (R, G, V) and/or arrangement of appliances (40) in different rooms, is stored in the first memory (20-1) of the receiver (10-1) associated with the identified appliance (40-1) by means of the command generator (1),
e) the steps b) to d) are repeated until all operational addresses (A2) are written in the corresponding first memories (20).

18. A method according to claim 17, characterised in that all receivers (10) with their associated appliances (40) are connected to a first common supply network (3), and in that the operational addresses (A2) are written in by the command generator (1) via a further common control line (2).

19. A method according to claim 17, characterised in that according to step b) the receivers (10) which send their original addresses (A2) do not yet have an operational address (A2), and in that the receivers (10) which have already been allocated an operational address (A2) in previous initiation of operations send this operational address (A2) instead of the original address (A1).

20. A method according to claim 17, characterised in that the operational address (A2) directly replaces the original address (A1), while a characterising address (A0) for denoting the type of appliance, in particular the type of lighting fitting, remains unchanged.

21. A method according to claim 17, characterised in that on the basis of a command from the command generator (1), each control part (30, 50) decides which of the two addresses (A1, A2) is to be selected.

22. A control system for a plurality of appliances in distributed arrangement, in particular lighting fittings, having
one or more command generators (1) or equal authority,
a receiver (10) associated with each appliance (40),
a control line (2) which connects the command generator (1) to each receiver (10),
a memory (20, 23) in each receiver (10) in which an operational address (A2) for the associated appliance (40) can be stored, and
a control part (30, 50) provided in each receiver (10) by means of which the appliance (40) associated therewith (10, 30, 50) can be controlled by the command generator (1) if they (10, 30, 50) have been activated in advance by selection of the operational address (A2) of the appliance (40) associated therewith,
wherein each memory (20, 23) in each receiver (10) can be erased and re-written by electrical signals,
characterised in that
before the system is put in operation each memory (20, 23) has an original address (A1) which enables recognition and identification of the associated appliance, and after installation and initiation of operation of the system stores a respective operational address (A2) which replaces the respective original address (A1), and in that a characterising address (A0) for designating the type of appliance (40), in particular the type of lighting fitting, remains unchanged.

## Revendications

1. Dispositif de commande de plusieurs utilisateurs disposés en des points différents, en particulier d'éléments d'éclairage, comportant :
un ou plusieurs émetteurs d'ordre (1),
un récepteur (10) associé à chacun des utilisateurs (40),
une conduite de commande (2) qui relie l'émetteur d'ordre (1) à chacun des récepteurs (10),
une première mémoire (20) dans chaque récepteur (10) dans laquelle une adresse de fonctionnement (A2) de l'utilisateur (40) associé peut être inscrite par des signal électriques et,
un module de commande (30, 50) prévu dans chaque récepteur (10) au moyen duquel l'utilsateur (40) associé à cet ensemble (10, 30, 50) peut être commandé par l'émetteur d'ordre (1) après activation préalable dudit ensemble (10, 30, 50) par sélection de l'adresse de fonctionnement (A2) de l'utilisateur (40) associé, caractérisé par le fait qu'il est prévu dans chaque récepteur (10) une deuxième mémoire (21) qui peut être lue par des moyens électriques et contient une adresse d'origine (A1) spécifique au récepteur, l'adresse d'origine (A1) comprenant un numéro de fabrication.

2. Dispositif de commande selon la revendication 1, caractérisé par le fait que les première et deuxième mémoires (20, 21) de chaque récepteur (10) sont constituées par des cellules de mémoire différentes d'une mémoire (23) commune.

3. Dispositif de commande selon la revendication 1 ou 2, caractérisé par le fait que la première mémoire ou l'élément de mémoire (23) de chaque récepteur peut être effacé et réinscrit par des signaux électriques.

4. Système de commande selon la revendication 1, caractérisé par le fait que l'adresse de fonctionnement (A2) et l'adresse d'origine (A1) peuvent être lues à distance par l'émetteur d'ordre (1) dans les première et deuxième mémoires (20, 21) de chaque récepteur (10), par l'intermédiaire de la ligne de commande (2).

5. Dispositif de commande selon la revendication 1, caractérisé par le fait que le type de chaque utilisateur (40) peut être déterminé au moyen d'une adresse de caractérisation (A0) supplémentaire spécifique à l'utilisateur, destinée à l'émetteur d'ordre (1) et que l'adresse de fonctionnement (A2) contient un élément de classification (R, G, V) échelonnée qui permet à l'émetteur d'ordre (1) de sélectionner conjointement des groupes (R) et des sous-groupes (G) et l'utilisateur (V, 40).

6. Système de commande selon l'une des revendications précédentes, caractérisé par le fait que la première et/ou la deuxième mémoire (20, 21) ou l'élément de mémoire (23) est/sont une mémoire EEPROM ou une mémoire RAM dotée d'un tampon.

7. Système de commande selon l'une des revendications précédentes, caractérisé par le fait que la ligne de commande (2) sert simultanément de ligne d'alimentation (3) des consommateurs (40) et que les signaux de commande sont émis par l'intermédiaire de la ligne d'alimentation (3).

8. Système de commande selon l'une des revendications 1 à 7, caractérisé par le fait que le module de commande (30, 50) d'un récepteur (10) comporte un variateur de lumière (50) qui permet de faire varier la puissance, en particulier la luminosité, de l'utilisateur (40) associé sur ordre de l'émetteur d'ordre (1).

9. Système de commande selon la revendication 1, caractérisé par le fait que l'émetteur d'ordre (1) présente :
une mémoire (4) à lecture/écriture sui contient des données (L1,...,L5) ainsi que des adresses (A0, A1, A2) pour chaque récepteur (10) connecté du système de commande,
un circuit d'entrée et d'utilisation (6) pour la commande manuelle et le réglage du système de commande ainsi que pour l'introduction d'adresses de fonctionnement (A2) pour les récepteurs 10) connectés.

10. Système de commande selon la revendication 9, caractérisé par le fait qu'il est prévu un dispositif d'affichage (7) pour l'émetteur d'ordre (1) afin d'afficher des données du système, l'état de fonctionnement ainsi que les adresses de fonctionnement (A2) de récepteur (10) connectés ou d'utilisateurs (40) associés à ceux-ci.

11. Système de commande selon l'une des revendications précédentes, caractérisé par le fait qu'une partie capteur (50-5) qui mesure une grandeur locale est associée au récepteur (10-5) et, que la grandeur mesurée est transmise à l'émetteur d'ordre (1) par l'organe de commande (30-5) prévu dans le récepteur (10-5) par l'intermédiaire de la ligne de commande (2) sur demande de l'émetteur d'ordre (1).

12. Système de commande selon la revendication 1, caractérisé par le fait que, pour une unité d'appareil composée de récepteurs (10) et d'utilisateurs (40), notamment pour une unité de lampes, l'adresse d'origine (A1) comporte à la fois le numéro de fabrication en tant que partie d'identification et une partie de caractérisation, au moyen desquels l'unité d'appareils peut être sollicitée et mise en service dans le système de commande de manière univoque et en fonction du type d'utilisateur.

13. Système de commande selon la revendication 1, caractérisé par le fait que la ligne de commande (2) est constituée de matériau optiquement conducteur et l'émetteur d'ordre (1) commande les récepteurs (10) connectés au moyen de signaux de commande optiques bidirectionnels ou par le fait que les récepteurs (10) connectés peuvent être commandés de manière bidirectionnelle ou unidirectionnelle au moyen de signaux infrarouges à partir d'un ou de plusieurs émetteurs d'ordre (1) notamment d'émetteurs d'ordre (1) non stationnaires.

14. Système de commande selon la revendication 1 ou la revendication 5, caractérisé par le fait que l'adresse d'origine (A1) spécifique au récepteur ou l'adresse de caractérisation (A0) spécifique à l'utilisateur est/sont mémorisées dans un élément de mémoire mécanique, notamment dans un connecteur à plusieurs bits à deux rangées de borne.

15. Système de commande selon la revendication 1, caractérisé par le fait qu'une adresse d'identification (A0) spécifique à l'utilisateur qui caractérise le type d'utilisateur (40) pour l'émetteur d'ordre (1) est mémorisée dans la deuxième mémoire (21) de chaque récepteur en plus de l'adresse d'origine (A1) spécifique au récepteur.

16. Système de commande selon la revendication 1, caractérisé par le fait que pour former une unité d'appareils prête au montage constituée du récepteur (10-1) et de l'utilisateur (40-1) l'adresse d'origine (A1) spécifique au récepteur comporte une partie de caractérisation (A0) qui caractérise l'utilisateur à des fins d'identification et de caractérisation simultanées.

17. Procédé pour la mise en service d'un système de commande selon l'une des revendications 1 à 12, caractérisé par les étapes suivantes :
a) on inscrit dans la deuxième mémoire (21) de chaque récepteur (10), avant installation du système, l'adresse d'origine (A1) spécifique au récepteur,
b) après installation du système, on appelle les récepteurs (10) de tous les utilisateurs (40) au moyen de l'émetteur d'ordre (1) par l'intermédiaire de ligne de commande (2) pour que ceux-ci envoient leurs adresses d'origine (A1) spécifiques au récepteur ,
c) l'émetteur d'ordre sélectionne l'une (A-1) des adresses d'origine (A1) transmises et transmet à l'utilisateur (40-1) associé à cette adresse (A-1) l'ordre de s'identifier,
d) au moyen de l'émetteur d'ordre (1), on inscrit dans la première mémoire (20-1) du récepteur (10-1) associé à l'utilisateur (40-1) identifié une adresse de fonctionnement (A2-1) qui tient compte d'un groupement déterminé (R, G, V) et/ou d'une disposition des utilisateurs (40) dans différents locaux après installation du système,
e) on répète les étapes b) à d) jusqu'à ce que toutes les adresses de fonctionnement (A2) soient inscrites dans les premières mémoires (20) correspondantes.

18. Procédé selon la revendication 17, caractérisé par le fait que l'on connecte tous les récepteurs (10) avec leurs utilisateurs (40) associés à un premier réseau d'alimentation (3) commun et par le fait que l'émetteur d'ordre (1) inscrit les adresses de fonctionnement (A2) par l'intermédiaire d'une ligne de commande (2) supplémentaire commune.

19. Procédé selon la revendication 17, caractérisé par le fait que conformément à l'étape b), les récepteurs (10) qui transmettent leurs adresses d'origine (A1) ne présentent pas encore d'adresses de fonctionnement (A2) et que les récepteurs (10) à qui l'on a déjà assigné une adresse de fonctionnement (A2) lors d'une procédure de mise en service antérieure, transmettent ladite adresse de fonctionnement (A2) à la place de l'adresse d'origine (A1).

20. Procédé selon la revendication 17, caractérisé par le fait que l'adresse de fonctionnement (A2) remplace directement l'adresse d'origine (A1), une adresse de caractérisation (A0) destinée à caractériser le type d'utilisateur, en particulier le type d'élément d'éclairage, restant inchangée.

21. Procédé selon la revendication 17, caractérisé par le fait que chaque partie de commande (30, 50) décide à partir d'un ordre de l'émetteur d'ordre (I) laquelle des deux adresses (A1, A2) doit être retenue.

22. Système de commande pour plusieurs utilisateurs disposés en différents des points, en particulier d'éléments d'éclairage comportant :
un ou plusieurs émetteurs d'ordre (1) identiques,
des récepteurs (10) associés à chacun des utilisateurs (40)
une ligne de commande (2) qui relie le transmetteur d'ordre (1) à chacun des récepteurs (10),
une mémoire (20, 23) dans chaque récepteur (10), dans laquelle une adresse de fonctionnement (A2) pour l'utilisateur (40) associé peut être inscrite et
un module de commande (30, 50) prévu dans chaque récepteur (10) au moyen de laquelle l'utilisateur (40) associé à cet ensemble (10, 30, 50) peut être commandé par l'émetteur d'ordre (1) après activation dudit ensemble (10, 30, 50) par sélection de l'adresse de fonctionnement (A2) de l'utilisateur (40) associé, chaque mémoire (20,23) de chaque récepteur (10) pouvant être effacée et réinscrite par des signaux électriques, caractérisé par le fait que chaque mémoire (20, 23) contient, avant mise en service du système, une adresse d'origine (A1) qui permet de reconnaître et d'identifier l'utilisateur concerné et, après installation et mise en service du système, mémorise une adresse de fonctionnement (A2) qui remplace l'adresse d'origine (A1) et par le fait qu'une adresse de caractérisation (A0) destinée à caractériser le type de l'utilisateur (40), en particulier le type de l'élément d'éclairage, reste inchangée.
